# EUROPEAN PATENT SPECIFICATION

(11) **EP 4 121 721 B1**
(45) Date of publication and mention of the grant of the patent: **22.05.2024**
(21) Application number: 21718991.9
(22) Date of filing: 19.03.2021
(51) Int. Cl.: G01D 3/036, G01D 5/04, G01D 5/14, G01D 5/244

(54) **POSITION SENSING SYSTEM WITH ERROR DETECTION AND CORRECTION**
POSITIONSMESSSYSTEM MIT FEHLERERKENNUNG UND -KORREKTUR
SYSTÈME DE DÉTECTION DE POSITION AVEC DÉTECTION ET CORRECTION D'ERREUR

(30) Priority: 20.03.2020 US 202062992220 P
(43) Date of publication of application: 25.01.2023
(73) Proprietor: CNH Industrial Belgium NV, 8210 Zedelgem (BE)
(72) Inventor: HILLEN, Curtis Frederick, Lititz, Pennsylvania 17543 (US); VANDERSTICHELE, Michiel, 8650 Merkem (BE); MOODY III, Fred Henry, Upper Marlboro, Maryland 20772 (US)
(74) Representative: CNH Industrial IP Department
(86) International application number: PCT/US2021/023088
(87) International publication number: WO 2021/188861

(56) References cited:
- WO-A1-2016/198111
- DE-A1- 19 855 358
- DE-A1-102004 015 205
- DE-A1-102018 215 796
- US-A1- 2010 176 806
- US-A1- 2011 202 308

## Description

### FIELD OF THE INVENTION

This invention relates generally to a position sensing system for an actuator with error detection and correction.

### BACKGROUND OF THE INVENTION

Conventional technologies for position sensing in actuators (particularly linear actuators) often use a contact-based potentiometer or position sensing. This method was generally accurate as the potentiometer provided a repeatable position signal which was mechanically linked to actuator travel. The downside of this conventional technology is that the contact based potentiometer was subject to contact wear over time and/or mechanical failures.

More recently, non-contact methods have been developed which use non-contact sensing technology, such as Hall-effect sensors. In such an arrangement, for example, a rotating magnet located on an actuator shaft of the actuator is used in combination with a Hall-effect sensor. The Hall-effect sensor counts pulses during the rotation of the actuator shaft in order to determine a distance traveled. This method is useful to calculate distance traveled, however, it is not always sufficient (by itself) to determine the latest position of the actuator shaft without a known point of reference.

In theory, it is possible to deduce the position of the actuator shaft if the starting point of the actuator shaft is known when the actuator was constructed. In practice, however, the actuator accumulates some amount of position error over time with no means of self-detection and/or correction.

To mitigate this problem, some actuators have more recently integrated a means to self-check the position of the actuator shaft by automatically and periodically moving the actuator shaft to a known reference point (or points) and checking the position of the actuator shaft. To correct for error and reorient the position of the actuator shaft, such autocorrecting actuators may (i) move the actuator shaft to a minimum extent and/or a maximum extent, or (ii) move the actuator shaft past a single in-path reference point. These methods can be effective, but have a few shortcomings. For some applications, traveling to both extents of the actuator is not possible or impractical. For example, the actuator may have more stroke than its associated linkage can allow, so actuator motion would be limited by the bounds of the linkage to which it is attached.

The single in-path reference is a viable solution to the previously mentioned stroke limitation problem for some actuators, however, the single in-path reference solution typically requires a dedicated effort to drive the actuator past this point to reorientation, and such a solution can be inconvenient, impractical or troublesome for many applications. Referring to the example of a car, the single in-path reference solution would be like returning home to reorient your position in the middle of a long journey with lots of stops, which would be impractical.

In keeping with the car analogy, what is proposed herein are mile posts along the highway, whereby each mile post is a unique identifier along the journey. Using the mile posts in combination with an odometer (e.g., non-contact travel sensor) provides a means of repetitious checking and correction of position at any point along the journey, and without need for a specific return to home or travel to both ends of the highway.

Patent publication document DE19855358 discloses a path-measuring device, especially for brake pedal movement in a vehicle. The device has at least one analog sensor and at least one incremental sensor to output analog and pulse train signals of path, respectively. The analog sensors may be Hall elements that co-operate with rod magnets. The incremental sensors may be Hall-circuits that co-operate with a row of alternating magnet poles.

Patent publication document DE102018215796 discloses a position detection system comprising a first position sensor configured to detect a magnetic field that forms magnet pole pairs arranged in a row, magnet poles of different polarity being arranged next to one another in each case, a second position sensor configured to detect a magnetic field at an individual magnet arranged in a center of the magnet pole pairs and at a distance from each magnet pole; and an evaluation device configured to evaluate detection results of the first and second position sensors that have been detected based on a movement of an element of the machine relative to the first and second position sensors, the evaluation including identifying a fault based on the detection results of the first and second position sensors.

Thus, what is sought is a position sensing system for an actuator that does not suffer from the disadvantages described above.

### SUMMARY OF THE INVENTION

The invention is related to an actuator position sensing system for sensing a position of an actuator, said actuator position sensing system comprising: a first sensor for detecting a position of a first moveable portion of the actuator; a plurality of second sensors each being configured for detecting a position of a second moveable portion of the actuator; and a controller connected to the first sensor and the plurality of second sensors, said controller being configured to determine a position of the second movable portion based upon data transmitted from the first sensor and one or more of the plurality of second sensors. The actuator may be a linear actuator. The first movable portion and the second movable portion are connected together such that rotation of the first moveable portion causes translation of the second movable portion.

According to an embodiment, the controller is configured to calculate a difference between (i) a position of the second movable portion as calculated based upon the data transmitted from the first sensor, and (ii) a position of the second movable portion as calculated based upon the data transmitted from said one or more of the plurality of second sensors.

According to an embodiment, a motor is connected to the first movable portion wherein the motor is configured to move the first moveable portion based upon a difference, which is calculated by the controller, between (i) a position of the second movable portion as calculated based upon the data transmitted from the first sensor, and (ii) a position of the second movable portion as calculated based upon the data transmitted from said one or more of the plurality of second sensors.

According to an embodiment, the first movable portion is a fastener having male threads and the second movable portion is a rod having female threads, and the male threads are engaged with the female threads.

According to an embodiment, one or more magnets are mounted to the first movable portion, wherein the first sensor is configured to sense a rotational position of the first movable portion based upon a magnetic field generated by the one or more magnets mounted to the first movable portion. The first sensor may be a Hall-Effect sensor.

According to an embodiment, one or more magnets are mounted to the second movable portion, wherein the plurality of second sensors are each configured to sense a translational position of the second movable portion based upon a magnetic field generated by the one or more magnets mounted to the second movable portion. Each of the plurality of second sensors may be a Hall-Effect sensor.

According to an embodiment, a component of a combine harvester is mounted to the second movable portion of the actuator, wherein said component of the combine harvester is, for example, a concave of the combine harvester, a louver of a sieve of the combine harvester, or a linkage in the sieve of the combine harvester.

The invention is equally related to a method of sensing a position of an actuator, the method comprising :
detecting, by a first sensor, a position of a first moveable portion of the actuator;
detecting, by a plurality of second sensors, a position of a second moveable portion of the actuator; and
determining, by a controller connected to the first sensor and the plurality of second sensors, a position of the second movable portion based upon data transmitted from the first sensor and one or more of the plurality of second sensors.

The method further includes sensing a rotational position of the first movable portion using the first sensor based upon a magnetic field generated by one or more magnets mounted to the first movable portion.

The method further includes sensing a translational position of the second movable portion using one or more of the plurality of second sensors based upon a magnetic field generated by one or more magnets mounted to the second movable portion.

According to an embodiment, the method further includes calculating a difference, by the controller, between (i) a position of the second movable portion as calculated based upon the data transmitted from the first sensor, and (ii) a position of the second movable portion as calculated based upon the data transmitted from said one or more of the plurality of second sensors.

According to an embodiment, the method further includes activating a motor connected to the first movable portion to move the first moveable portion, which moves the second movable portion, based upon the calculated difference.

According to an embodiment, the method further includes sensing a rotational position of the first movable portion using the first sensor based upon a magnetic field generated by one or more magnets mounted to the first movable portion.

According to an embodiment, the method further includes sensing a translational position of the second movable portion using one or more of the plurality of second sensors based upon a magnetic field generated by one or more magnets mounted to the second movable portion.

According to an embodiment, the method further includes moving a component of a combine harvester that is mounted to the second movable portion of the actuator, wherein said component of the combine harvester is a concave of the combine harvester, a louver of a sieve of the combine harvester, or a linkage in the sieve of the combine harvester.

### BRIEF DESCRIPTION OF THE DRAWINGS

Embodiments of inventions will now be described, strictly by way of example, with reference to the accompanying drawings, in which:
FIG. 1 is a schematic view of an actuator and position sensing and correction system for the actuator, according to a first example of the invention.
FIG. 2 is a block diagram showing a process for detecting an error in the position of an actuator, such as the actuators of FIGs. 1, 3 and 4, and correcting the error.
FIG. 3 is a schematic view of an actuator and position sensing and correction system for the actuator, according to a second example of the invention.
FIG. 4 is a schematic view of an actuator and position sensing and correction system for the actuator, that is not according to the invention.

### DETAILED DESCRIPTION OF THE DRAWINGS

Exemplary embodiments of the present invention provide a system and method for sensing a position of an actuator.

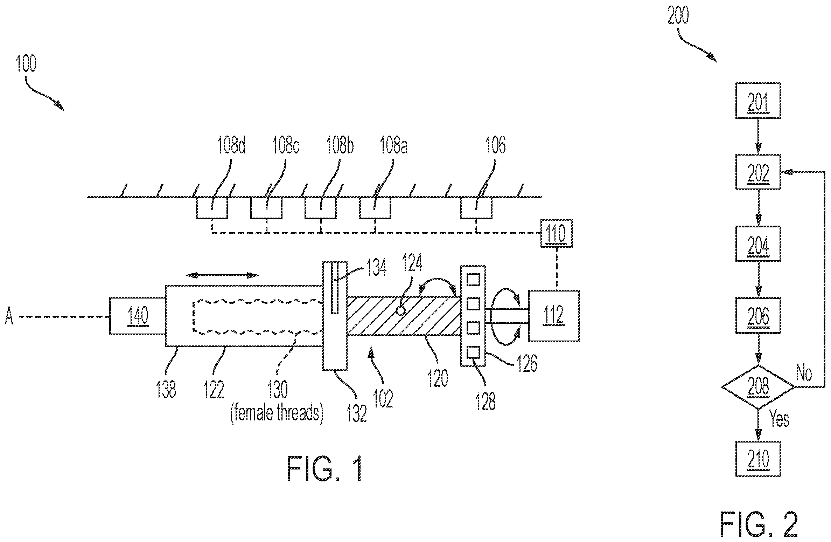

FIG. 1 depicts a schematic view of an actuator position sensing and correction system 100. The system 100 generally comprises an actuator 102, a first sensor 106 for detecting movement of a first moveable portion of the actuator 102, and a grouping of second sensors 108a-108d (referred to either individually or collectively as second sensor(s) 108) for detecting movement of a second moveable portion of the actuator 102; means 112 for activating and deactivating the actuator 102; and a controller 110. The controller 110 is generally configured to receive inputs from each of the sensors 106 and 108, determine whether actuator 102 is in its intended position, and (optionally) control means 112 based upon the inputs received from the sensors 106 and 108 to correct the position of the actuator 102. It is noted that the means 112 is an optional feature of the system 100.

Actuator 102 may be a linear actuator having a fastener or screw 120 and an actuator rod 122. Screw 120 may be referred to herein as a "first moveable portion" of the actuator, while rod 122 may be referred to herein as a "second moveable portion" of the actuator 102. Movement of the first and second moveable portions of the actuator 102 is different, i.e., first moveable portion rotates without translation, whereas the second moveable portion translates without rotation.

Screw 120 includes a threaded segment 124 extending from a cylindrical (or otherwise shaped) head portion 126. A series of magnets 128 are disposed (either uniformly or non-uniformly) about the perimeter of the cylindrical head portion 126. The male threaded segment 124 of the screw 120 is meshed with female threads disposed in a blind hole 130 that is formed in the rod 122. The open end of the blind hole 130 is formed in a cylindrical (or otherwise shaped) flange 132 on the rod 122. One (or more) magnets 134 are disposed (either uniformly or non-uniformly) about the perimeter of the flange 132. Rod 122 is not limited to any particular shape or size, and may be referred to as a shaft, sleeve or nut.

The screw 120 is configured to rotate about axis A, but not translate along axis A, whereas, the rod 122 is configured to translate along axis A, but not rotate about axis A, in response to rotation of the screw 120. Screw 120 and rod 122 are supported by means (not shown) enabling the aforementioned movement. The means 112 for driving (i.e., rotating) the screw 120 of the actuator 102 may be a motor, a solenoid, an electric motor, or a hydraulic motor, for example. Means 112 may be connected to a motor by a gear, a hydraulic line, or a belt, for example. The motor may be a motor of a combine harvester, for example.

It should be understood that the actuator 102 is not limited to the linear actuator which is shown and described herein. For example, the actuator 102 could be a rotary actuator (which may or may not rotate less than 360 degrees). In sum, the actuator 102 requires a first moving portion (e.g., screw 120), the movement of which imparts movement to a second moving part (e.g., rod 122).

First sensor 106 may be a Hall-effect sensor, a rotary encoder, or an optical sensor, for example. The first sensor 106 is preferably a non-contact sensor (i.e., no contact with actuator 102), but could also be a contact sensor, such as a potentiometer. Other means for detecting the movement (e.g., rotation) of a component are known. First sensor 106 may be described herein as a "first sensor means" or "first means for sensing."

First sensor 106 is configured for sensing the rotational position of the screw 120 of the actuator 102. Specifically, the sensor 106 senses the rotational position by detecting the presence (and/or absence) of the magnetic field of the individual magnets 128 on the head 126 of the screw 120, and transmits a signal to the controller 110. Accordingly, sensor 106 is aligned with head 126 along a plane or axis that is transverse to axis of rotation A. The above described process of Hall-effect sensing is known to those skilled in the art. Based upon the signals received from the first sensor 106, a processor of the controller 110 is configured to determine the rotational position of the screw 120. And, based upon the rotational position of the screw 120, the controller 110 is configured to determine the translational position of the rod 122. It should be understood that rotation of the screw 120 by a pre-determined amount results in translation of the rod 122 by a pre-determined amount. The pre-determined amount of translation is a function of the thread pitch of the screw 120 and the threaded hole 130, as is known in the art.

As is noted in the Background section, despite the ability of the first sensor 106 to detect rotation of the screw 120 and the ability of the controller to calculate translation of the rod 122 as a function of rotation of the screw 120, the actuator 102 will accumulate some amount of positional error over time with no means of self-detection. Thus, it would be desirable to verify the position of the actuator 102 (e.g., the translation position of the rod 122 of the actuator 102) by an alternative measurement mechanism.

In view of the foregoing desire, the second sensors 108 are configured for sensing the translational position of the flange 132 of the rod 122 of the actuator 102. Notably, the second sensors 108 are configured for sensing the translational position of the flange 132 of the rod 122 in both translational directions (i.e., forward and backward) of rod 122. Specifically, the second sensors 108 each sense the presence (or absence) of the magnetic field of the magnet 134 on the flange 132 of the rod 122, and transmits a signal to the controller 110. Magnet 134 may be positioned at another location on rod 122. Hall-effect sensing is known to those skilled in the art. Based upon the signals received from the second sensors 108, the processor of the controller 110 is configured to determine the translational position of the rod 122. Second sensors 108a and 108d may be positioned at the extents or "end-stops" of travel of the rod 122, and second sensors 108b and 108c are positioned between those end-stops. Accordingly, second sensors 108b and 108c are positioned at locations where the rod 122 most often travels.

Each of the second sensors 108 may be a Hall-effect sensor, as described above, a rotary encoder, or an optical sensor, for example. The second sensor 108 is preferably a non-contact sensor, but could also be a contact sensor, such as a potentiometer. Other means for detecting the movement (e.g., translation) of a component are known. Second sensor 108 may be described herein as a "second sensor means" or "second means for sensing."

Sensors 106 and 108 are fixed to a stationary component, and may not be capable of moving with respect to actuator 102. Sensors 106 and 108 are (optionally) aligned along a straight and linear path. Sensors 108a-108d may be spaced apart by a distance that is either uniform (i.e., equal) or non-uniform.

The controller 110 is connected to the sensors 106 and 108 and the control means 112, as depicted in FIG. 1A. The controller 110 includes a conventional processor that is configured to determine whether actuator 102 is maintained in its intended position, as determined by the second sensors 108, and (optionally) actuate the means 112 based upon the inputs received from the sensors 106 and 108 to correct the position of the actuator 102 to its intended position.

The actuator 102 may be connected to a moveable component on a combine harvester, for example. The moveable component could be a header (or a component of a header) of the combine harvester. Further details of a combine harvester are disclosed in U.S. Patent No. 7,487,024 and 6,119,531.

More particularly, the end 138 of the rod 122, which is opposite the flange 132, is connected to a component 140 to be moved. By way of non-limiting example, the component 140 to be moved may be a concave of a combine harvester, in which case the actuator 102 represents a concave adjustment actuator that sets the distance between the concave and the rotor of the harvester. Such a concave adjustment actuator is described in U.S. Patent No. 7,452,267. Alternatively, the component 140 may be a louver (or louvers) of a sieve of a harvester, in which case the actuator 102 is a louver actuator that is configured to adjust the rotational position of the louver(s) of a sieve for adjusting the size of the opening in the sieve in order to permit a pre-determined grain size to pass through the opening in the sieve that is controlled by the rotational position of the louvers. Such a louver actuator is described in U.S. Patent No. 5,041,059. As another alternative, the component 140 may be a linkage in a sieve of a harvester, in which case the actuator 102 is configured to adjust the degree of side shake experienced by a sieve. Such a linkage is described in U.S. Patent App. Pub. No. 2019-0357441. It should be understood that the component to be moved may be any component requiring precise position control, and is not limited to being a component of a combine harvester.

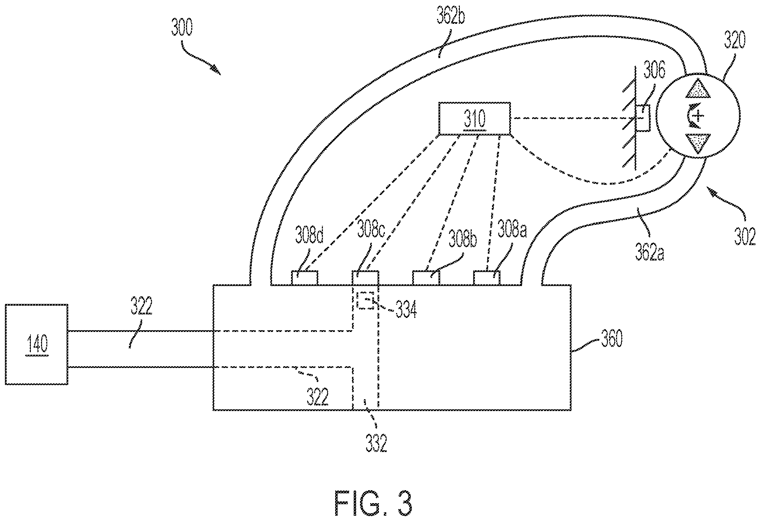

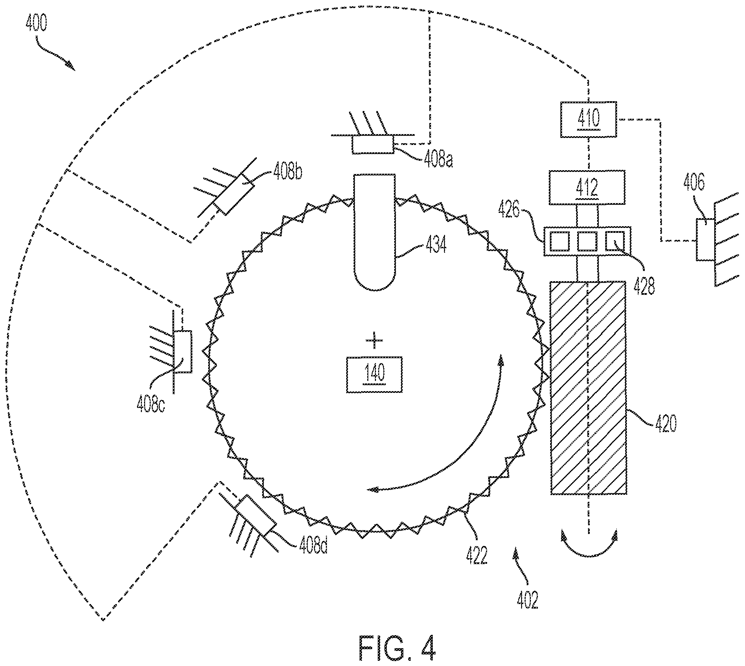

FIG. 2 is a block diagram showing a process 200 for detecting an error in the position of the actuator 102, and correcting the error. Step 201 comprises transmitting to the controller 110 the initial rotational position of the first moveable portion (i.e., the head 126 of the screw 120). The initial rotational position of the head 126 of the screw 120 may be factory-set or detected by the first sensor 106. At some time after step 201, and following use of the actuator 102, step 202 of the process 200 comprises transmitting rotational position information relating to the rotational position of the first moveable portion, namely, the head 126 of the screw 120, from the first sensor 106 to the controller 110. Step 204 comprises calculating the translational position of the second movable portion (i.e.., the flange 132 (or other location) on the rod 122) based upon the data transmitted at step 202 and using a look-up table or equation, for example. Step 206 comprises receiving translational position information for the second movable portion, namely, the flange 132 (or other location) on the rod 122, at the controller 110 from one or more of the second sensors 106. Decision step 208 comprises comparing the result at steps 206 and 204. If, at step 208, a difference is not detected (`NO'), then the process returns to step 202. If, however, at step 208, a difference is detected ('YES'), this difference signifies that the actuator 102 has accumulated some amount of positional error over time, and the process continues to step 210. Step 210 (which is optional) comprises actuating the means 112 to move the first moveable portion. For the actuator 102, step 210 involves rotating the screw 120 in either a clockwise or counterclockwise direction, which causes either backwards or forwards translation of the rod 112. Step 210 is performed until the position of the second movable portion (i.e., rod 122) reaches its intended position, i.e., the position at which rod 112 should be maintained, as determined by the controller 110. As an alternative to step 210, the current position of the second movable portion (i.e., rod 122) may simply be reset in the controller 110 based upon the data from step 206. It is noted at the outset, that the above method also applies to the first and second movable portions of the actuators of FIGs. 3 and 4, which will be described hereinafter.

FIG. 3 depicts a schematic view of an actuator 302 and position sensing and correction system 300 for the actuator 302, according to a second example of the invention. The system 300 is similar to the system 100 described above, and only the differences there between will be described.

The system 300 generally comprises a hydraulic actuator 302 including a pump motor 320 (i.e., the first moveable portion) that is fluidly connected to a cylinder 360 by way of two fluid lines 362a and 362b that are fluidly connected to opposite sides of a flange 332 of a piston 322 (i.e., the second movable portion) that is movably positioned within the cylinder 360. The pump motor 320 is configured for moving the piston 322 within the cylinder 360 in two different directions depending upon the direction of rotation of the pump motor 320. It should be understood that fluid cannot move across the flange 332. The above-described component 140 to be moved is connected to the piston 322, for the applications described above. Component 140 may represent a steering cylinder of a combine harvester, for example.

The system 300 further includes a first sensor 306 for detecting movement of the first moveable portion of the actuator 302, namely, the pump motor 320. The system 300 further includes a grouping of second sensors 308a-308d (referred to either individually or collectively as second sensor(s) 308) for detecting movement of a second moveable portion of the actuator 302, namely, the piston 322. The controller 310 is generally configured to receive inputs from each of the sensors 306 and 308, determine whether actuator 302 is in its intended position, and (optionally) control pump motor 320 based upon the inputs received from the sensors 306 and 308 to correct the position of the actuator 302.

First sensor 306 is configured for sensing the rotational position of the pump motor 320 of the actuator 302. Specifically, the sensor 306 senses the rotational position by detecting the presence (and/or absence) of a magnetic field of a rotating magnet (for example) in or on the pump motor 320, and transmits a corresponding signal to the controller 310. Based upon the signals received from the first sensor 306, a processor of the controller 310 is configured to determine the rotational position of the pump motor 320. And, based upon the rotational position of the pump motor 320, the controller 310 is configured to determine the translational position (i.e., displacement) of the piston 322 based upon basic fluid theory and using a table or look up function. It should be understood that rotation of the pump motor 320 by a pre-determined amount results in translation of the piston 322 by a pre-determined amount.

As is noted in the Background section, despite the ability of the first sensor 306 to detect rotation of the pump motor 320 and the ability of the controller to calculate translation of the piston 322 as a function of rotation of the pump motor 320, the actuator 302 will accumulate some amount of positional error over time with no means of self-detection. Thus, it would be desirable to verify the position of the actuator 302 (e.g., the translation position of the piston 322 of the actuator 302) by an alternative measurement mechanism.

In view of the foregoing desire, the second sensors 308 are configured for sensing the translational position of the flange 332 of the piston 322 of the actuator 302. Specifically, the second sensors 308 each sense the presence (or absence) of the magnetic field of the magnet 334 on the flange 332 of the piston 322, and transmit a signal to the controller 310. Based upon the signals received from the second sensors 308, the processor of the controller 310 is configured to determine the translational position of the piston 322.

The controller 310 includes a conventional processor that is configured to determine whether actuator 302 is maintained in its intended position, as determined by the second sensors 308, and (optionally) actuate the pump motor 320 based upon the inputs received from the sensors 306 and 308 to move the position of the piston 322 of the actuator 302 to its intended position. The steps described in FIG. 2 are also applicable to the system 300 shown in FIG. 3.

FIG. 4 depicts a schematic view of an actuator 402 and position sensing and correction system 400 for the actuator 402, not according to the invention. The system 400 is similar to the system 100 described above, and only the differences there between will be described.

The system 400 generally comprises an actuator 402 including a worm screw 420 (i.e., the first moveable portion) that is meshed with a spur gear 422 (i.e., the second moveable portion) such that rotation of worm screw 420 about its axis causes rotation of spur gear 422 about its respective axis. The above-described component 140 to be moved is connected to the spur gear 422, for the reasons and applications described above. A motor 412 is configured for rotating worm screw 420 about its axis, which in turn rotates the spur gear 422, which in turn rotates the component 140. Spur gear 422 can be rotated in two different directions depending upon the direction of rotation of the motor 412. Motor 412 may be electrically or hydraulically operated, for example.

The system 400 further includes a first sensor 406 for detecting movement of the first moveable portion of the actuator 402, namely, the worm screw 420. The system 400 further includes a grouping of second sensors 408a-408d (referred to either individually or collectively as second sensor(s) 408) for detecting movement of a second moveable portion of the actuator 402, namely, the spur gear 422. The controller 410 is generally configured to receive inputs from each of the sensors 406 and 408, determine whether actuator 402 is in its intended position, and (optionally) control motor 412 based upon the inputs received from the sensors 406 and 408 to correct the position of the actuator 402.

First sensor 406 is configured for detecting the presence (and/or absence) of the magnetic field of one or more magnet 428 that are disposed on a rotating flange 426 of the worm screw 420, and transmits a corresponding signal to the controller 410. Flange 426 is non-rotatably connected to worm screw 420. Based upon the signals received from the first sensor 406, a processor of the controller 410 is configured to determine the rotational position of the worm screw 420. And, based upon the rotational position of the worm screw 420, the controller 410 is configured to determine the rotational position of the spur gear 422 by applying basic gear theory and using a table or look up function.

As is noted in the Background section, despite the ability of the first sensor 406 to detect rotation of the worm screw 420 and the ability of the controller to calculate the rotational position of the spur gear 422 as a function of rotation of the worm screw 420, the actuator 402 will accumulate some amount of positional error over time with no means of self-detection. Thus, it would be desirable to verify the position of the actuator 402 (e.g., the rotational position of the spur gear 422 of the actuator 402) by an alternative measurement mechanism.

In view of the foregoing desire, the second sensors 408 are configured for sensing the presence (or absence) of a magnet 434 that is fixed to the side of the spur gear 422. It should be understood that the magnet 434 is spatially offset from the gear teeth and does not interfere with the gear teeth. Specifically, the second sensors 408 each sense the presence (or absence) of the magnetic field of the magnet 434 on the spur gear 422, and transmit a signal to the controller 410. Based upon the signals received from the second sensors 408, the processor of the controller 410 is configured to determine the rotational position of the spur gear 422.

The controller 410 includes a conventional processor that is configured to determine whether actuator 402 is maintained in its intended position, as determined by the second sensors 408. The controller 410 is also (optionally) configured to actuate the motor 412 to adjust the worm screw 420 based upon the inputs received from the sensors 406 and 408 to move the position of the spur gear 422 of the actuator 402 to its intended position. The steps described in FIG. 2 are also applicable to the system 400 shown in FIG. 4.

It is noted that system may be applicable to arrangements where worm gear rotation is less than or equal to 360 degrees, but could be useful for applications requiring multi-turn rotation. Modifications to the system 400 are envisioned. For example, the sensors 408 may track rotation of spur gear 422, and sensor 406 may track rotation of worm screw 420.

It is to be understood that the operational steps are performed by the controller 110 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller described herein is implemented in software code or instructions which are tangibly stored on a tangible computer readable medium. Upon loading and executing such software code or instructions by the controller, the controller may perform any of the functionality of the controller described herein, including any steps of the methods described herein.

## Claims

1. An actuator position sensing system (100, 300) for sensing a position of an actuator (102, 302), wherein said actuator position sensing system comprises: an actuator (102, 302) comprising a first moveable portion (126, 320) and a second moveable portion (132, 322);
a first sensor (106, 306) for detecting a position of the first moveable portion (126, 320) of the actuator (102, 302);
a plurality of second sensors (108, 308) each being configured for detecting a position of the second moveable portion (132, 322) of the actuator (102, 302); and
a controller (110) connected to the first sensor (106, 306) and the plurality of second sensors (108, 308), said controller (110) being configured to determine a position of the second movable portion (132, 322) based upon data transmitted from the first sensor (106, 306) and one or more of the plurality of second sensors (108, 308), **characterized in that** the first movable portion (126, 320) and the second movable portion (132, 322) are connected together such that rotation of the first moveable portion (126, 320) causes translation of the second movable portion (132, 322).

2. The actuator position sensing system of claim 1, wherein the controller (110) is configured to calculate a difference between (i) a position of the second movable portion (132, 322) as calculated based upon the data transmitted from the first sensor (106, 306), and (ii) a position of the second movable portion (132, 322) as calculated based upon the data transmitted from said one or more of the plurality of second sensors (108, 308).

3. The actuator position sensing system of any preceding claim, wherein the actuator position sensing system further comprises a motor (112, 320) connected to the first movable portion (126, 320) that is configured to move the first moveable portion (126, 320) based upon a difference, which is calculated by the controller (110), between (i) a position of the second movable portion (132, 322) as calculated based upon the data transmitted from the first sensor (106, 306), and (ii) a position of the second movable portion (132, 322) as calculated based upon the data transmitted from said one or more of the plurality of second sensors (108, 308).

4. The actuator position sensing system of any preceding claim, wherein the first movable portion (126) is a fastener having male threads (120) and the second movable portion (132) is a rod having female threads (130), and the male threads (120) are engaged with the female threads (130).

5. The actuator position sensing system of any preceding claim, wherein the actuator position sensing system further comprises one or more magnets (128, 428) mounted to the first movable portion (126, 320), wherein the first sensor (106, 306) is configured to sense a rotational position of the first movable portion (126, 320) based upon a magnetic field generated by the one or more magnets (128, 428) mounted to the first movable portion (126, 320).

6. The actuator position sensing system of any preceding claim, wherein the first sensor (106, 306) is a Hall-Effect sensor.

7. The actuator position sensing system of any preceding claim, wherein the actuator position sensing system further comprises one or more magnets (134, 334) mounted to the second movable portion (132, 322), wherein the plurality of second sensors (108, 308) are each configured to sense a translational position of the second movable portion (132, 322) based upon a magnetic field generated by the one or more magnets (134, 334) mounted to the second movable portion (132, 322).

8. The actuator position sensing system of any preceding claim, wherein each of the plurality of second sensors (108, 308) is a Hall-Effect sensor.

9. The actuator position sensing system of any preceding claim, wherein the actuator (102, 302) is a linear actuator (102) or a hydraulic actuator (302).

10. The actuator position sensing system of any preceding claim, wherein the actuator position sensing system further comprises a component (140) of a combine harvester that is mounted to the second movable portion (132, 322) of the actuator (102, 302), wherein said component (140) of the combine harvester is a concave of the combine harvester, a louver of a sieve of the combine harvester, or a linkage in the sieve of the combine harvester.

11. A method of sensing a position of an actuator (102, 302), wherein said method comprises:
detecting, by a first sensor (106, 306), a position of a first moveable portion (126, 320) of the actuator (102, 302);
detecting, by a plurality of second sensors (108, 308), a position of a second moveable portion (132, 322) of the actuator (102, 302); and
determining, by a controller (110) connected to the first sensor (106, 306) and the plurality of second sensors (108, 308), a position of the second movable portion (132, 322) based upon data transmitted from the first sensor (106, 306) and one or more of the plurality of second sensors (108, 308),
**characterized in that** the method further comprises :
- sensing a rotational position of the first movable portion (126,320) using the first sensor (106,306) based upon a magnetic field generated by one or more magnets mounted to the first movable portion,
- sensing a translational position of the second movable portion (132,322) using one or more of the plurality of second sensors (108,308) based upon a magnetic field generated by one or more magnets mounted to the second movable portion, further **characterized in that** the first movable portion (126, 320) and the second movable portion (132, 322) are connected together such that rotation of the first moveable portion (126, 320) causes translation of the second movable portion (132, 322).

12. The method of claim 11, wherein the method further comprises activating a motor (112, 320) connected to the first movable portion (126, 320) to move the first moveable portion (126, 320), which moves the second movable portion (132, 322), based upon the calculated difference.

## Patentansprüche

1. Betätigungseinrichtung-Positionserfassungssystem (100, 300) zum Erfassen einer Position einer Betätigungseinrichtung (102, 302), wobei das Betätigungseinrichtungsposition-Erfassungssystem umfasst:
eine Betätigungseinrichtung (102, 302), die einen ersten bewegbaren Abschnitt (126, 320) und einen zweiten bewegbaren Abschnitt (132, 322) umfasst;
einen ersten Sensor (106, 306) zum Erfassen einer Position des ersten bewegbaren Abschnitts (126, 320) der Betätigungseinrichtung (102, 302);
eine Mehrzahl von zweiten Sensoren (108, 308), die jeweils dazu eingerichtet sind, eine Position des zweiten bewegbaren Abschnitts (132, 322) der Betätigungseinrichtung (102, 302) zu erfassen; und
eine Steuereinrichtung (110), die mit dem ersten Sensor (106, 306) und der Mehrzahl von zweiten Sensoren (108, 308) verbunden ist, wobei die Steuereinrichtung (110) dazu eingerichtet ist, basierend auf Daten, die von dem ersten Sensor (106, 306) und einem oder mehreren der Mehrzahl von zweiten Sensoren (108, 308) übertragen werden, eine Position des zweiten bewegbaren Abschnitts (132, 322) zu bestimmen,
**dadurch gekennzeichnet, dass**
der erste bewegbare Abschnitt (126, 320) und der zweite bewegbare Abschnitt (132, 322) derart miteinander verbunden sind, dass eine Drehung des ersten bewegbaren Abschnitts (126, 320) eine translatorische Bewegung des zweiten bewegbaren Abschnitts (132, 322) bewirkt.

2. Betätigungseinrichtung-Positionserfassungssystem nach Anspruch 1, wobei die Steuereinrichtung (110) dazu eingerichtet ist, eine Differenz zwischen i) einer Position des zweiten bewegbaren Abschnitts (132, 322), wie sie basierend auf den Daten berechnet wird, die von dem ersten Sensor (106, 306) übertragen werden, und ii) einer Position des zweiten bewegbaren Abschnitts (132, 322) zu berechnen, wie sie basierend auf den Daten berechnet wird, die von dem einen oder mehreren der Mehrzahl von zweiten Sensoren (108, 308) übertragen werden.

3. Betätigungseinrichtung-Positionserfassungssystem nach einem der vorhergehenden Ansprüche, wobei das Betätigungseinrichtung-Positionserfassungssystem des Weiteren einen Motor (112, 320) umfasst, der mit dem ersten bewegbaren Abschnitt (126, 320) verbunden ist und der dazu eingerichtet ist, den ersten bewegbaren Abschnitt (126, 320) basierend auf einer Differenz zu bewegen, die von der Steuereinrichtung (110) zwischen i) einer Position des zweiten bewegbaren Abschnitts (132, 322), wie sie basierend auf den Daten berechnet wird, die von dem ersten Sensor (106, 306) übertragen werden, und ii) einer Position des zweiten bewegbaren Abschnitts (132, 322) berechnet wird, wie sie basierend auf den Daten berechnet wird, die von dem einen oder mehreren der Mehrzahl von zweiten Sensoren (108, 308) übertragen werden.

4. Betätigungseinrichtung-Positionserfassungssystem nach einem der vorhergehenden Ansprüche, wobei der erste bewegbare Abschnitt (126) ein Befestigungselement ist, das ein Außengewinde (120) aufweist, und wobei der zweite bewegbare Abschnitt (132) eine Stange ist, die ein Innengewinde (130) aufweist, und wobei das Außengewinde (120) mit dem Innengewinde (130) in Eingriff steht.

5. Betätigungseinrichtung-Positionserfassungssystem nach einem der vorhergehenden Ansprüche, wobei das Betätigungseinrichtung-Positionserfassungssystem des Weiteren einen oder mehrere Magnete (128, 428) umfasst, die an dem ersten bewegbaren Abschnitt (126, 320) angebracht sind, wobei der erste Sensor (106, 306) dazu eingerichtet ist, eine Drehposition des ersten bewegbaren Abschnitts (126, 320) basierend auf einem magnetischen Feld zu erfassen, das von einem oder mehreren Magneten (128, 428) erzeugt wird, die an dem ersten bewegbaren Abschnitt (126, 320) angebracht sind.

6. Betätigungseinrichtung-Positionserfassungssystem nach einem der vorhergehenden Ansprüche, wobei der erste Sensor (106, 306) ein Hall-Effekt-Sensor ist.

7. Betätigungseinrichtung-Positionserfassungssystem nach einem der vorhergehenden Ansprüche, wobei das Betätigungseinrichtung-Positionserfassungssystem des Weiteren einen oder mehrere Magnete (134, 334) umfasst, die an dem zweiten bewegbaren Abschnitt (132, 322) angebracht sind, wobei die Mehrzahl von zweiten Sensoren (108, 308) jeweils dazu eingerichtet sind, eine translatorische Position des zweiten bewegbaren Abschnitts (132, 322) basierend auf einem magnetischen Feld zu erfassen, das von dem einen oder mehreren Magneten (134, 334) erzeugt wird, die an dem zweiten bewegbaren Abschnitt (132, 322) angebracht sind.

8. Betätigungseinrichtung-Positionserfassungssystem nach einem der vorhergehenden Ansprüche, wobei jeder der Mehrzahl von zweiten Sensoren (108, 308) ein Hall-Effekt-Sensor ist.

9. Betätigungseinrichtung-Positionserfassungssystem nach einem der vorhergehenden Ansprüche, wobei die Betätigungseinrichtung (102, 302) ein Linearantrieb (102) oder ein hydraulischer Antrieb (302) ist.

10. Betätigungseinrichtung-Positionserfassungssystem nach einem der vorhergehenden Ansprüche, wobei das Betätigungseinrichtung-Positionserfassungssystem des Weiteren eine Komponente (140) eines Mähdreschers umfasst, die an dem zweiten bewegbaren Abschnitt (132, 322) der Betätigungseinrichtung (102, 302) angebracht ist, wobei die Komponente (140) des Mähdreschers ein Hohlraumelement des Dreschkorb, ein Gitter eines Siebes des Mähdreschers oder ein Verbindungselement im Sieb des Mähdreschers ist.

11. Verfahren zum Erfassen einer Position einer Betätigungseinrichtung (102, 302), wobei das Verfahren umfasst:
Erfassen einer Position eines ersten bewegbaren Abschnitts (126, 320) der Betätigungseinrichtung (102, 302) mittels eines ersten Sensors (106, 306);
Erfassen einer Position eines zweiten bewegbaren Abschnitts (132, 322) der Betätigungseinrichtung (102, 302) mittels einer Mehrzahl von zweiten Sensoren (108, 308); und
Bestimmen einer Position des zweiten bewegbaren Abschnitts (132, 322) mittels einer Steuereinrichtung (110), die mit dem ersten Sensor (106, 306) und der Mehrzahl von zweiten Sensoren (108, 308) verbunden ist, basierend auf Daten, die von dem ersten Sensor (106, 306) und einem oder mehreren der Mehrzahl von zweiten Sensoren (108, 308) übertragen werden,
**dadurch gekennzeichnet, dass** das Verfahren des Weiteren umfasst:
- Erfassen einer Drehposition des ersten bewegbaren Abschnitts (126, 320) unter Verwendung des ersten Sensors (106, 306) basierend auf einem magnetischen Feld, das von einem oder mehreren Magneten erzeugt wird, die an dem ersten bewegbaren Abschnitt angebracht sind,
- Erfassen einer translatorischen Position des zweiten bewegbaren Abschnitts (132, 322) unter Verwendung des einen oder mehrerer der Mehrzahl von zweiten Sensoren (108, 308) basierend auf einem magnetischen Feld, das von einem oder mehreren Magneten erzeugt wird, die an dem zweiten bewegbaren Abschnitt angebracht sind,
des Weiteren **dadurch gekennzeichnet, dass** der erste bewegbare Abschnitt (126, 320) und der zweite bewegbare Abschnitt (132, 322) derart miteinander verbunden sind, dass die Drehung des ersten bewegbaren Abschnitts (126, 320) eine translatorische Bewegung des zweiten bewegbaren Abschnitts (132, 322) bewirkt.

12. Verfahren nach Anspruch 11, wobei das Verfahren des Weiteren das Aktivieren eines Motors (112, 320) umfasst, der mit dem ersten bewegbaren Abschnitt (126, 320) verbunden ist, um den ersten bewegbaren Abschnitt (126, 320) zu bewegen, der den zweiten bewegbaren Abschnitt (132, 322), basierend auf der berechneten Differenz, bewegt.

## Revendications

1. Un système de détection de position d'actionneur (100, 300) pour détecter une position d'un actionneur (102, 302), dans lequel ledit système de détection de position d'actionneur comprend :
un actionneur (102, 302) comprenant une première partie mobile (126, 320) et une seconde partie mobile (132, 322) ;
un premier capteur (106, 306) pour détecter une position de la première partie mobile (126, 320) de l'actionneur (102, 302) ;
une pluralité de seconds capteurs (108, 308), chacun étant configuré pour détecter une position de la seconde partie mobile (132, 322) de l'actionneur (102, 302) ; et
un contrôleur (110) connecté au premier capteur (106, 306) et à la pluralité de seconds capteurs (108, 308), ledit contrôleur (110) étant configuré pour déterminer une position de la seconde partie mobile (132, 322) sur la base de données transmises par le premier capteur (106, 306) et un ou plusieurs de la pluralité de seconds capteurs (108, 308),
**caractérisé en ce que**
la première partie mobile (126, 320) et la seconde partie mobile (132, 322) sont raccordées ensemble de telle sorte que la rotation de la première partie mobile (126, 320) provoque le déplacement de la seconde partie mobile (132, 322).

2. Le système de détection de position d'actionneur selon la Revendication 1, dans lequel le contrôleur (110) est configuré pour calculer une différence entre (i) une position de la seconde partie mobile (132, 322) comme calculée sur la base des données transmises par le premier capteur (106, 306), et (ii) une position de la seconde partie mobile (132, 322) comme calculée sur la base des données transmises par ledit un ou lesdits plusieurs de la pluralité de seconds capteurs (108, 308).

3. Le système de détection de position d'actionneur selon l'une quelconque des revendications précédentes, dans lequel le système de détection de position d'actionneur comprend en outre un moteur (112, 320) raccordé à la première partie mobile (126, 320) qui est configuré pour déplacer la première partie mobile (126, 320), sur la base d'une différence, qui est calculée par le contrôleur (110), entre (i) une position de la seconde partie mobile (132, 322) comme calculée sur la base des données transmises par le premier capteur (106, 306), et (ii) une position de la seconde partie mobile (132, 322) comme calculée sur la base des données transmises par ledit un ou lesdits plusieurs de la pluralité de seconds capteurs (108, 308).

4. Le système de détection de position d'actionneur selon l'une quelconque des revendications précédentes, dans lequel la première partie mobile (126) est une attache ayant des filetages mâles (120) et la seconde partie mobile (132) est une tige ayant des filetages femelles (130), et les filetages mâles (120) sont engagés avec les filetages femelles (130).

5. Le système de détection de position d'actionneur selon l'une quelconque des revendications précédentes, dans lequel le système de détection de position d'actionneur comprend en outre un ou plusieurs aimants (128, 428) montés sur la première partie mobile (126, 320), dans lequel le premier capteur (106, 306) est configuré pour détecter une position de rotation de la première partie mobile (126, 320) sur la base d'un champ magnétique généré par le ou les aimants (128, 428) montés sur la première partie mobile (126, 320).

6. Le système de détection de position d'actionneur selon l'une quelconque des revendications précédentes, dans lequel le premier capteur (106, 306) est un capteur à effet Hall.

7. Le système de détection de position d'actionneur selon l'une quelconque des revendications précédentes, dans lequel le système de détection de position d'actionneur comprend en outre un ou plusieurs aimants (134, 334) montés sur la seconde partie mobile (132, 322), dans lequel la pluralité de seconds capteurs (108, 308) sont chacun configurés pour détecter une position de déplacement de la seconde partie mobile (132, 322) sur la base d'un champ magnétique généré par le ou les aimants (134, 334) montés sur la seconde partie mobile (132, 322).

8. Le système de détection de position d'actionneur selon l'une quelconque des revendications précédentes, dans lequel chaque pluralité de seconds capteurs (108, 308) est un capteur à effet Hall.

9. Le système de détection de position d'actionneur selon l'une quelconque des revendications précédentes, dans lequel l'actionneur (102, 302) est un actionneur linéaire (102) ou un actionneur hydraulique (302).

10. Le système de détection de position d'actionneur selon l'une quelconque des revendications précédentes, dans lequel le système de détection de position d'actionneur comprend en outre un composant (140) d'une moissonneuse-batteuse qui est monté sur la seconde partie mobile (132, 322) de l'actionneur (102, 302), dans lequel ledit composant (140) de la moissonneuse-batteuse est un contre-batteur de la moissonneuse-batteuse, une ailette d'un tamis de la moissonneuse-batteuse, ou une liaison dans le tamis de la moissonneuse-batteuse.

11. Un procédé de détection d'une position d'un actionneur (102, 302), dans lequel ledit procédé comprend :
une détection, par un premier capteur (106, 306), d'une position d'une première partie mobile (126, 320) de l'actionneur (102, 302) ;
une détection, par une pluralité de seconds capteurs (108, 308), d'une position de la seconde partie mobile (132, 322) de l'actionneur (102, 302) ; et
une détermination, par un contrôleur (110) raccordé au premier capteur (106, 306) et à la pluralité de seconds capteurs (108, 308), d'une position de la seconde partie mobile (132, 322) sur la base de données transmises par le premier capteur (106, 306) et un ou plusieurs de la pluralité de seconds capteurs (108, 308),
**caractérisé en ce que** le procédé comprend en outre :
- la détection d'une position de rotation de la première partie mobile (126, 320) à l'aide du premier capteur (106, 306) sur la base d'un champ magnétique généré par un ou plusieurs aimants montés sur la première partie mobile,
- la détection d'une position de déplacement de la seconde partie mobile (132, 322) à l'aide d'un ou de plusieurs de la pluralité de seconds capteurs (108, 308) sur la base d'un champ magnétique généré par un ou plusieurs aimants montés sur la seconde partie mobile,
**caractérisé en outre en ce que** la première partie mobile (126, 320) et la seconde partie mobile (132, 322) sont raccordées ensemble de telle sorte que la rotation de la première partie mobile (126, 320) provoque le déplacement de la seconde partie mobile (132, 322).

12. Le procédé selon la Revendication 11, dans lequel le procédé comprend en outre l'activation d'un moteur (112, 320) connecté à la première partie mobile (126, 320) pour déplacer la première partie mobile (126, 320), qui déplace la seconde partie mobile (132, 322), sur la base de la différence calculée.
